# EUROPÄISCHE PATENTANMELDUNG

(11) **EP 1 729 070 A1**
(43) Veröffentlichungstag der Anmeldung: **06.12.2006**
(21) Anmeldenummer: 05011672.2
(22) Anmeldetag: 31.05.2005
(51) Int. Cl.: F24D 13/02

(54) **Wandaufbau einer Innenraum-Begrenzungswand und Heizmodul**

(71) Anmelder: Moletherm Holding AG, 4502 Solothurn (CH)
(72) Erfinder: Pereira, Manuel Collares, 1649-038 Lissabon (PT)
(74) Vertreter: Neubauer, Hans-Jürgen

(57) **Zusammenfassung**

Die Erfindung betrifft einen Wandaufbau einer Innenraum-Begrenzungswand mit einem Bestandteil aus PCM-Material (Phase Change Material) als Latentwärmespeicher. Erfindungsgemäß sind zumindest in Wandflächenteilbereichen in folgender Reihenfolge auf einer Wandtragstruktur eine PCM-Schicht (22, 22'; 56) die PCM-Material als Latentwärmespeichermaterial enthält, und darüber wenigstens ein elektrisch betreibbares, zur Rauminnenseite hin liegendes Flächenheizelement (9a-9d; 34, 35) angeordnet. Damit wird zur Erhöhung des Wirkungsgrads nach rückwärts vom Flächenheizelement abgestrahlte Wärmeenergie durch Speicherung genutzt.

## Beschreibung

Die Erfindung betrifft einen Wandaufbau einer Innenraumbegrenzungswand als Seitenwand, Deckenwand oder Fußbodenwand mit einem Bestandteil aus PCM-Material (Phase Change Material) als Latentwärmespeicher.

Latentwärmespeicher mit sogenannten PCM-Materialien (Phase Change Materials) sind allgemein auch in Verbindung mit Wandaufbauten von Gebäuden bekannt. Wird einem festem PCM-Material Wärme zugeführt ändert dieses bei Erreichen seiner Schmelztemperatur seinen Aggregatzustand von fest nach flüssig und absorbiert während dieses Phasenwechsels eine bestimmte Wärmemenge als sogenannte Schmelzwärme. Trotz Wärmezufuhr ändert sich hierbei die Temperatur des PCM-Materials nicht, so dass die Wärme als latente (versteckte) Wärme gespeichert wird. Bei einem Wärmeentzug erfolgt ein umgekehrter Phasenwechsel von flüssig auf fest und die gespeicherte Latentwärme wird wieder bei konstanter Temperatur abgegeben. PCM-Speichermaterialien stehen insbesondere als Latentwärmeparafine und als Salzhydrate mit unterschiedlichen Schmelzpunkten als Granulate oder als flächige Elemente, wie Vließe, Spannplatten, Textilien zur Verfügung. Vorteilhaft können bei solchen Latentwärmespeichern in wenig Material hohe Wärmemengen ohne damit verbundene Temperaturerhöhungen abgespeichert werden.

Die Integration von PCM-Material in Gebäudestrukturen zum Puffern von Temperaturzyklen und als Wärmespeicher zur Gebäudeheizung ist allgemein bekannt. Beispielsweise ist ein PCM-haltiger Gipsputz für einen Wandaufbau bekannt.

Weiter ist eine Fußbodenspeicherheizung allgemein bekannt, bei der auf einem Rohboden eine Wärmedämmschicht liegt, auf der mit einer Vielzahl von Rohrleitungsschlangen ein Warmwasser-Niedertemperatur-Heizregister verlegt ist. Darauf ist eine Schüttung aus PCM-Granulat aufgebracht, die mit einem Trockenestrich abgedeckt ist. Damit ist gegenüber der sonst üblichen dicken Zementestrichschicht bei Fußbodenspeicherheizungen eine Reduzierung der Estrichdicke in Verbindung mit einer größeren Wärmespeicherfähigkeit erreicht. Ziel dieser Anordnung unter Verwendung des PCM-Granulats ist somit hier eine Reduzierung der Estrichschichtdicke bis zu 50% im Vergleich zur einer reinen Zementestrichvariante. Durch die Anordnung des Heizregisters unter dem PCM-Granulat wird hier primär die dadurch gebildete Wärmespeicherschicht erwärmt. Latente Wärme wird vom darunterliegenden Heizregister beim Phasenwechsel entsprechend der Wärmespeicherkapazität und Wärmeleitfähigkeit des PCM-Granulats aufgenommen und erst dann vom PCM-Granulat an den Gebäudeinnenraum abgegeben. Eine unmittelbare Wärmeabgabe des Heizregisters an den Gebäudeinnenraum erfolgt nicht.

Eine solche Fußbodenspeicherheizung ist daher regelungstechnisch träge. Gewünschte Innenraumtemperaturänderungen oder eine Reaktion auf Außentemperaturänderungen sind mit einer entsprechenden Abregelung des Heizregister erst nach relativ langen Zeiten zu erhalten. Bei der möglichen Verwendung einer Heizfolie anstelle des Heizregisters, ergeben sich die gleichen Verhältnisse, wobei zudem der Heizfolienwirkungsgrad durch die Anordnung unter dem PCM-Granulat bezüglich einer Wärmestrahlungsabgabe an den Gebäudeinnenraum reduziert ist.

Weiter ist eine Wandbauplatte als Leichtbauplatte allgemein bekannt. Die von der Gebäudeaußenseite zur Gebäudeinnenseite hin aus einer Wärmeschutzschicht, einer Wärmedämmschicht, einem Luftspalt, einer PCM-Schicht und einer Abdeckplatte aus Gipskarton besteht. Durch die Verwendung der PCM-Schicht wird hier die Innenraumtemperatur durch Abpufferung von äußeren Temperaturspitzen vergleichmäßigt. Eine integrierte Heizung ist hier nicht vorgesehen.

Zudem sind Flächenheizelemente als Wandheizelemente bekannt (EP 1 135 970 B1), bei denen zwischen und unter zwei beabstandeten elektrischen Leitern eine Beschichtung aus einem Beschichtungsmaterial angebracht ist, das eine elektromagnetische Strahlung im Infrarotbereich, speziell im nicht sichtbaren Infrarotbereich abstrahlt. Das hier verwendete Beschichtungsmaterial enthält bestimmte Stoffmengenanteile von Grafit und von einem isolierenden Ruß sowie weitere Bestandteile. Die elektrischen Leiter zu den Heizelementen sind mit einem Steuergerät verbunden, welches insbesondere die Energie für eine Anregung der Beschichtung für die elektrische Abstrahlung liefert. Die strahlungsaktive Beschichtung ist auf einem nicht leitendem Material angebracht. Die Verkabelung verläuft individuell konzipiert auf der Wandfläche zwischen den Flächenheizelementen und dem Steuergerät.

Aufgabe der Erfindung ist es, einen Wandaufbau einer Innenraumbegrenzungswand mit einem Bestandteil aus PCM-Material als Latentwärmespeicher so weiterzubilden, dass ein hoher Wirkungsgrad einer darin integrierten elektrischen Heizung erreichbar ist. Eine weitere Aufgabe der Erfindung besteht darin, ein Heizmodul zur Herstellung eines solchen Wandaufbaus vorzuschlagen, das einfach, kostengünstig und funktionssicher verlegbar ist.

Die Aufgabe wird hinsichtlich des Wandaufbaus mit den Merkmalen des Anspruchs 1 und hinsichtlich des Heizmoduls mit den Merkmalen des Anspruchs 12 gelöst.

Gemäß Anspruch 1 sind zumindest in Wandflächenteilbereichen in folgender Reihenfolge auf einer Wandtragstruktur eine PCM-Schicht, die PCM-Material als Latentwärmespeichermaterial enthält, und darüber wenigstens ein elektrisch betreibbares, zur Rauminnenseite hin liegendes Flächenheizelement angeordnet.

Solche elektrisch betreibbaren Flächenheizelemente, insbesondere mit infrarotstrahlenden Strahlungsheizungsbeschichtungen strahlen auf der zur Gebäudeinnenraumseite liegenden Fläche ebenso wie auf der Rückfläche Wärmestrahlung etwa mit der gleichen Intensität ab. Diese zur Rückseite abgegebene Strahlung geht bisher in eine rückwärtig anschließende Dämmschicht und/oder in die Wandstruktur, beispielsweise eine Mauer und damit nur wenig für die Heizung des Gebäudeinnenraums nutzbar.

Der Vorteil einer Wärmestrahlungsheizung besteht bekanntlich in ihrer Funktion ähnlich der Wirkung einer Sonnenbestrahlung: Die Energieübertragung auf einen zu erwärmenden Körper, beispielsweise auf eine Person erfolgt durch die elektromagnetische Infrarotstrahlung, wobei die Wärmeentwicklung im Wesentlichen erst im Auftreffen auf den Körper erfolgt. Eine Person hat ein angenehmes Wärmeempfinden und die Innenraumtemperatur kann relativ niedrig gehalten werden bei einem insgesamt geringen Aufwand an Elektroenergie für eine solche Heizung.

Mit der erfindungsgemäßen Maßnahme, hinter einem zur Gebäudeinnenraumseite hin liegenden Flächenheizelement eine PCM-Schicht anzubringen, ist es möglich, den Wirkungsgrad vergleichsweise zu verbessern und den Aufwand an Elektroenergie zu reduzieren:

Die von einem Flächenheizelement an der Rückfläche abgegebene Wärmestrahlung wird hier unmittelbar als Latentwärme in die PCM-Schicht eingespeist und dort gespeichert. Dies geschieht zusätzlich, wenn das Flächenheizelement in Betrieb ist und an seiner Vorderseite unmittelbar zudem in einen Innenraum abstrahlt. Im Gegensatz zum Stand der Technik wird hier somit nicht vor der Frontseite eines Flächenheizelements eine PCM-Schicht angebracht, sondern an der Rückseite eines Flächenheizelements, um dessen sonst weitgehend ungenutzte nach hinten abstrahlende Energie aufzufangen und zu speichern.

Bei der Anordnung nach dem Stand der Technik mit der PCM-Schicht vor einem Flächenheizelement wird dagegen die nach hinten in die Wand hinein gerichtete Abstrahlung praktisch nicht oder nur sehr wenig genutzt.

Die Heizungsregelung reagiert bei der erfindungsgemäßen Anordnung relativ schnell, da die relativ träge Wärmeabgabe über die PCM-Schicht von der schnell wirksamen Wärmestrahlungsabgabe von der Vorderseite der Flächenheizelemente überlagerbar ist.

Besonders vorteilhaft kann der Kostenaufwand für die ohnehin sehr sparsam, mit wenig Elektroenergie zu betreibende, erfindungsgemäße Heizung hier noch durch die Ausnützung günstiger Nachtstromtarife reduziert werden. Dazu kann bei entsprechender Auslegung der Regelung die Heizung in der Nachtstromtarifzeit mit relativ geringer Energie und gleichzeitiger Beladung des PCM-Latentwärmespeichers betrieben werden. Während der Zeit des teueren Tagstromtarifs, werden die Flächenheizelemente abgeschaltet und es erfolgt eine Wärmeabgabe aus dem PCM-Latentwärmespeicher durch die Flächenheizelemente hindurch in den Gebäudeinnenraum.

Eine weitere Funktionsverbesserung wird nach Anspruch 2 dadurch erreicht, dass die Wandtragstruktur selbst aus wärmedämmendem Material besteht und/oder zwischen der Wandstruktur und der PCM-Schicht eine zusätzliche Dämmschicht angebracht ist. Damit wird insbesondere vermieden, dass von der PCM-Schicht durch Wärmeübertragung Wärme nach hinten in die Wandstruktur abgegeben wird, die dann für eine Abgabe in den Innenraum nicht mehr zur Verfügung stehen würde.

Nach Anspruch 3 sind für die Bildung der PCM-Schicht an sich bekannte Latentspeichermaterialien wie Salzhydrate und/oder Parafine möglich. Dabei können nach Anspruch 4 an sich bekannte Ausführungsformen von PCM-Schichten verwendet werden, wobei bevorzugt plattenförmig zusammenhängende oder gekapselte, insbesondere foliengekapselte Materialverbünde einsetzbar sind.

Da erfindungsgemäß die von den Flächenheizelementen nach hinten abgestrahlte elektromagnetische Infrarotstrahlung eingefangen und in einer Latentwärmespeicherschicht genutzt werden soll, ist es im Prinzip erforderlich, dass die PCM-Schicht mit gleicher Flächenerstreckung hinter den Flächenheizelementen angebracht ist. Ein besonders vorteilhafter Aufbau ergibt sich nach Anspruch 5 dazu, wenn die PCM-Schicht in einer entsprechenden wannenförmigen Ausnehmung in einer Dämmschicht oder einer Bauplatte unter einem oder unter einer Fläche aus mehreren Flächenheizelementen einliegt. Die PCM-Schicht ist dadurch lagefixiert und gehalten und bei entsprechender Wannentiefe kann insgesamt eine gleiche Schichtdicke der Dämmschicht erreicht werden.

In einer besonders bevorzugten Weiterbildung nach Anspruch 6 besteht der Wandaufbau einer Seitenwand und/oder einer Deckenwand und/oder einer Fußbodenwand des Gebäudeinnenraums aus einer Tragstruktur als Seitenwandtragstruktur, Deckenstruktur oder Bodenstruktur auf der zumindest in einem Teilbereich wenigstens ein handhabbares Heizmodul als Abdeckelement angebracht und verbunden ist. Die vorstehend beschriebenen Schichtaufbauten und Anordnungen sind grundsätzlich als Einzelschichten in einzelnen Verlegeschritten anbringbar. Besonders vorteilhaft ist es jedoch, wenn zumindest eine teilweise Integration dieser Schichten schon von vornherein in verlegbaren Heizmodulen integriert ist. Dazu besteht ein solches Heizmodul aus zumindest einem elektrisch betreibbaren Flächenheizelement und aus einem Basisflächenbauteil als Basisdämmplatte oder Basisbauplatte, auf dem oder eingelassen in eine wannenförmige Ausnehmung die PCM-Schicht und das zumindest eine Flächenheizelement angebracht sind. Zudem ist das Flächenheizelement mit elektrischen Anschlussleitungen verbunden, die ebenfalls als Bestandteil des Heizmoduls auf dem Basisflächenbauteil angebracht sind. In einem solchen Heizmodul sind somit von vorneherein schon vor der Verlegung das Basisflächenbauteil als Trägerteil, der Latentwärmespeicher als PCM-Schicht und die elektrische Heizung mit den Flächenheizelementen sowie deren elektrischer Anschluss integriert. Die Verlegung solcher Heizmodule ist somit schnell, einfach und kostengünstig möglich und insbesondere auch für den do it yourself-Einbau geeignet.

Die dämmplattenintegrierte Ausführungsform der Elektrospeicherheizung ist insbesondere für einen Fußbodenaufbau mit einer Abdeckung durch einen Bodenbelag geeignet. Die bauplattenintegrierte Ausführungsform der Elektrospeicherheizung ist bevorzugt für einen Seitenwandaufbau oder Deckenwandaufbau konzipiert.

Gemäß Anspruch 7 ist das mindestens eine Flächenheizelement mit flachen Anschlussleitungen, insbesondere mit gegenüberliegenden Kupferleitungsstreifen verbunden, die als Bestandteil des Heizmoduls auf dem Basisflächenteil angebracht und dort bis in einen Seitenrandbereich geführt sind. Dort können über an sich bekannte Verbindungstechniken Anschlusskabel zur Verbindung mit einem Steuergerät für die Energieversorgung und Steuerung/Regelung des wenigstens einen Flächenheizelements angeschlossen sein. Damit ergibt sich eine einfache, sichere und funktionsfähige elektrische Anschlusstechnik.

Mit Anspruch 8 wird als Bestandteil eines Flächenheizelements eine dünnwandige Beschichtung als aktive infrarotstrahlende Strahlungsheizungsbeschichtung beansprucht, die unmittelbar über der PCM-Schicht oder je nach Art und Aufbau der PCM-Schicht auch mittelbar über eine Trägerfolie angebracht sein kann.

Bevorzugt wird nach Anspruch 9 ein Betrieb der Flächenheizelemente mit einer Niedervoltspannung unter 50 Volt durchgeführt, um personenkritische höhere Spannungen auszuschließen. Insbesondere im Deckenbereich kann jedoch auch ein Betrieb mit höheren Spannungen zweckmäßig sein.

Nach Anspruch 10 wird für die Heizungsregelung ein Steuergerät mit einem Raumlufttemperatursensor und/oder mit einem im Wandaufbau enthaltenen Wandtemperatursensor verbunden. Damit kann die Heizungsregelung über einen Sollistwertvergleich der Raumlufttemperatur betrieben werden. Über den wandintegrierten Temperatursensor kann die Heizung bei unzulässig hohen Temperaturen im Wandbereich abgeregelt werden. Mit einem solchen Steuergerät kann zudem auch eine Steuereinrichtung zur Ausnützung günstiger Stromtarife, insbesondere von Nachtstromtarifen verbunden sein. Solche Steuereinrichtungen werden auf dem Markt angeboten und sind allgemein bekannt.

Mit Anspruch 11 ist ein Heizmodul zur Herstellung eines Wandaufbaus beansprucht, wobei das Heizmodul aus einem Basisflächenbauteil als Basisdämmplatte oder Basisbauplatte und mindestens einem darauf über einer PCM-Schicht integriert angebrachten im verlegten Zustand an der Oberseite liegenden Flächenheizelement gebildet ist. Das aufgebrachte Flächenheizelement ist dünn im Vergleich zur Schichtdicke des Basisflächenbauteils und der PCM-Schicht. Zudem weist das Flächenheizelement eine infrarotstrahlende und vorzugsweise mit Niedervoltspannung betreibbare Strahlungsheizungsbeschichtung auf. Mit einem solchen Heizmodul und den Weiterbildungen nach den Ansprüchen 13 bis 15 sind die vorstehend erläuterten Vorteile bei der Herstellung eines Wandaufbaus zu erreichen.

Anhand einer Zeichnung werden Ausführungsbeispiele der Erfindung erläutert.

### Es zeigen:

- Fig. 1: eine Draufsicht auf einen Fußbodenaufbau in einem Gebäudeinnenraum,
- Fig. 2: einen Schnitt entlang der Linie A-A aus Fig. 1 einer ersten Ausführungsform eines Boden-Heizmoduls,
- Fig. 3: einen Schnitt entlang der Linie A-A aus Fig. 1 einer zweiten Ausführungsform eines Boden-Heizmoduls,
- Fig. 4: eine Ansicht eines Seitenwandaufbaus eines Gebäudeinnenraums mit teilweise verlegten Gipskartonplatten mit und ohne Heizelemente sowie der Führung der elektrischen Leitungen,
- Fig. 5: einen Längsschnitt zur Verdeutlichung des Schichtaufbaus entlang der Linie B-B aus Fig. 6, und
- Fig. 6: eine Draufsicht auf ein Wand-Heizmodul in einer Explosionsdarstellung.

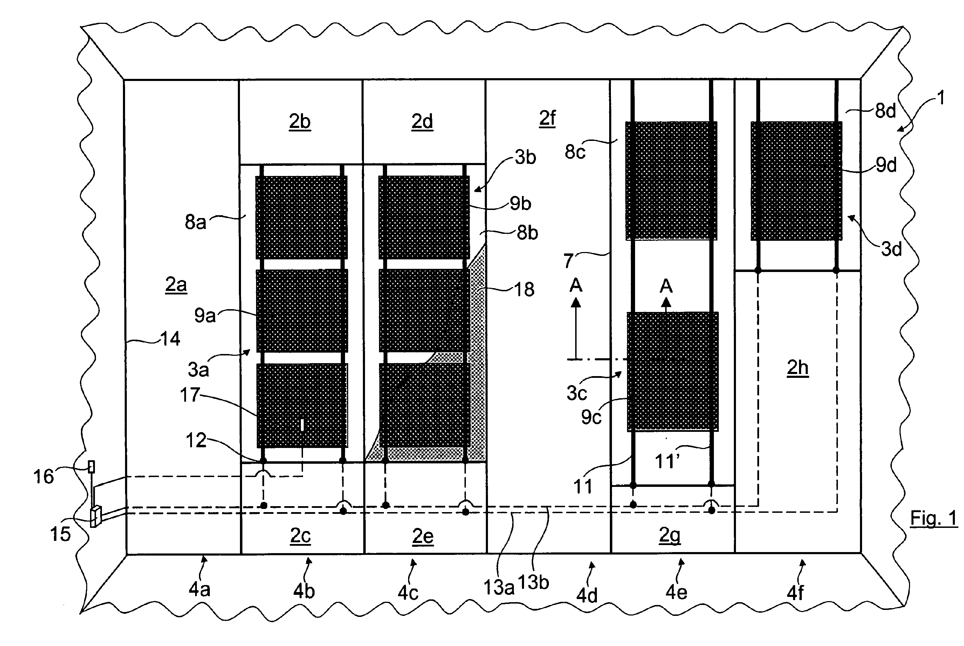

In Fig. 1 ist ein Fußbodenaufbau 1 mit einer elektrischen Fußbodenheizung in einer Draufsicht gezeigt, mit einer bereits fertiggestellten Verlegung einer Dämmschicht 6.

Diese Dämmschicht 6 besteht aus Dämmstoffplatten 2a bis 2h und Boden-Heizmodulen 3a bis 3d, die in einer Draufsicht Rechteckflächen gleicher Breite aufweisen und aneinandergrenzend, bodenflächendeckend in nebeneinanderliegenden Bahnen 4a bis 4f verlegt sind. In den Bahnen 4a und 4d sind nur Dämmstoffplatten 2a und 2f (ohne Flächenheizelemente) verwendet. In den Bahnen 4b und 4c sind nebeneinanderliegend die Boden-Heizmodule 3a und 3b verlegt, wobei durch entsprechend abgelängte Dämmstoffplattenteile 2b, 2c bzw. 2d, 2e die Bahnen 4b und 4c komplettiert sind. In den Bahnen 4e und 4f liegend unterschiedlich lange Boden-Heizmodule 3c und 3d mit einer Breitseite an einer Raumkante an, wobei im übrigen die Bahnen 4e und 4f durch Dämmstoffplattenteile 2g und 2h ergänzt sind.

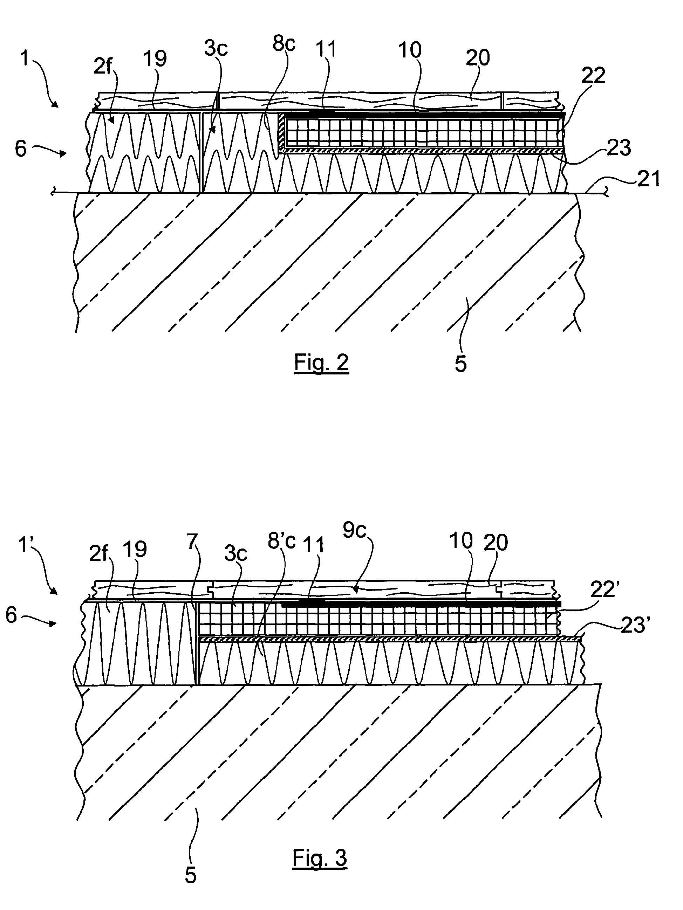

In Verbindung mit Fig. 2 ist erkennbar, dass auf einen Rohboden 5 beispielsweise auf eine Betondecke eine Dämmschicht 6 ausgelegt ist, die mit gleicher Schichtstärke aus den Dämmstoffplatten 2a bis 2h und aus Boden-Heizmodulen 3a bis 3d besteht, die jeweils an Stößen 7 aneinanderliegen. Zwischen dem Rohboden 5 und der Dämmschicht 6 ist weiter eine Trennfolie 21 als Feuchtesperre verwendet.

Die Boden-Heizmodule 3a bis 3d bestehen jeweils aus einer Basisdämmplatte 8a bis 8d auf deren Oberseiten PCM-Schichten 22 und darüber Flächenheizelemente 9a bis 9d fest integriert angebracht sind. Bei den Boden-Heizmodulen 3a und 3b sind jeweils drei in Längsrichtung beabstandete Flächenheizelemente 9a, 9b angebracht. Beim Heizmodul 3c sind dagegen zwei Flächenheizelemente 9c mit etwas größerer Längserstreckung und einem größeren Abstand angebracht und beim Heizmodul 3d ist nur ein Flächenheizelement 9d verwendet. Die Anordnung, Größe und Lage der Heizmodule 3a bis 3d und der Flächenheizelemente 9a bis 9d wird nach den jeweils erforderlichen Heizerfordernissen bestimmt und in einem Verlegeplan vorgegeben.

Ein Flächenheizelement 9a bis 9d besteht jeweils aus einer Strahlungsheizungsbeschichtung 10 eines infrarotstrahlenden Beschichtungsmaterials, vorzugsweise mit Stoffmengenanteilen von Graphit und isolierendem Ruß. Die Strahlungsheizungsbeschichtung 10 ist jeweils unmittelbar oder mittelbar über eine Zwischenfolie auf die darunterliegende, in einer flächigen, wannenförmigen Ausnehmung der Basisdämmplatte 8a bis 8d aufgenommene PCM-Schicht 22 aufgebracht. Die Ausnehmung ist zudem mit einer Trennfolie 23 ausgekleidet. Als PCM-Schicht 22 können hier auf dem Markt verfügbare Materialformen wie in Platten aufgenommene PCM-Materialien, in Folien gekapselte PCM-Materialien, geschüttetes PCM-Granulat oder PCM-Materialverbünde unter Verwendung von Salzhydraten oder Paraffinen eingesetzt werden. Die Auswahl und Optimierung auch hinsichtlich der Phasenwechseltemperatur richtet sich jeweils nach den konkreten Bedingungen des Heizmodulaufbaus und den heiztechnischen Gegebenheiten.

Über gegenüberliegende Randbereiche der Strahlungsheizungsbeschichtungen 10 von zugeordneten Flächenheizelementen 9a bis 9d einer Bahn 4b, 4c, 4e, 4f verlaufen ebenfalls als Bestandteil der Heizmodule 3a bis 3d flache Leitungsstreifen 11, 11' als parallele Kupferstreifen bis zu einem Bahnbreitenrand. Dort sind jeweils an Anschlusspunkten 12, vorzugsweise über Steckverbindungen und/oder Climpverbindungen, Anschlusskabel 13a, 13b angeschlossen, wobei jeweils linksseitige Leitungsstreifen 11 mit dem Anschlusskabel 13b und rechtsseitige Leitungsstreifen 11' mit dem Anschlusskabel 13a verbunden sind. Von den Anschlusspunkten 12 aus verlaufen die Anschlusskabel 13a, 13b durch die Stoßfugen 7 jeweils unter den angrenzenden Dämmstoffplatten 2a bis 2h (strichliert gezeichnete Anschlusskabel 13a, 13b) bis zur Bodenseitenkante 14, von wo sie nach oben zu einem Steuergerät 15 geführt sind. Das Steuergerät 15 ist mit einem Raumlufttemperatursensor 16 und zudem mit einem Bodentemperatursensor 17 verbunden, der im Bereich eines Flächenheizelements 9a angebracht ist.

Auf den Boden-Heizmodulen 3a bis 3d und als deren Bestandteil ist jeweils eine Abdeckfolie 18 als mechanische Schutzfolie und elektrische Isolierfolie aufgebracht, die der Übersichtlichkeit wegen nur in Verbindung mit dem Heizmodul 3b teilweise dargestellt ist.

Zudem ist über der Dämmschicht 6 eine flächendeckende Trennfolie 19 angebracht (in Fig. 1 noch nicht verlegt). Auf dieser Trennfolie 19 ist bei einem fertig verlegten Fußbodenaufbau 1 als Nutzschicht ein Bodenbelag 20, beispielsweise aus Holz, in der Art eines Fertigparkettbodens, verlegt.

Der alternative Fußbodenaufbau 1' nach Fig. 3 entspricht weitgehend dem Fußbodenaufbau 1 nach Fig. 2, so dass gleiche Aufbaubestandteile mit gleichen Bezugszeichen versehen sind. Die Unterschiede liegen im Aufbau der Heizmodule 3a-3d dergestalt, dass hier auf der gesamten Fläche der Basisdämmplatten 8a-8d jeweils eine PCM-Schicht 22' mit dazwischenliegender Trennfolie 23' angebracht ist. Die Gesamtschichtdicke einschließlich Flächenheizelementen 9a-9d entspricht wieder der Schichtdicke der Dämmstoffplatten 2a-2h.

Die Basisdämmplatte 8a-8d, die PCM-Schicht 22', die Trennfolie 23' und die Flächenheizelemente 9a-9d sind auch hier zweckmäßig jeweils zu einem kompletten Boden-Heizmodul 3a-3d verbunden. Grundsätzlich können alle Schichten oder ein Teilverbund dieser Schichten auch einzeln nacheinander aufeinanderliegend verlegt werden.

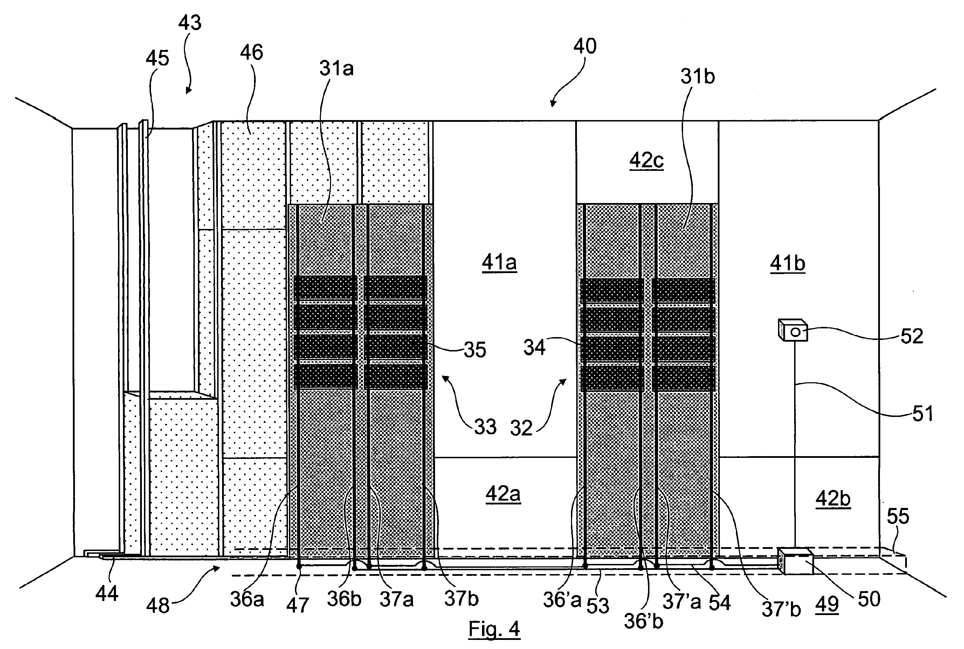

In Fig. 4 sind bei einer Seitenwand 40 eines Gebäudeinnenraums Bauplatten als Wand-Heizmodule 31 a, 31 b in der Art von Gipskartonplatten verwendet, mit einer Längserstreckung von circa zwei Metern entsprechend etwa einer Griffhöhe einer Person. Im mittleren Längsbereich der Bauplatten 31 a, 31 b sind nebeneinander zwei Felder 32, 33 mit jeweils vier übereinanderliegenden rechteckigen und in Längsrichtung beabstandeten Flächenheizelementen 34, 35 angeordnet.

Diese Flächenheizelemente 34, 35 weisen ebenso wie bei den vorstehenden Boden-Heizmodulen eine dünnwandige Beschichtung als aktive Strahlungsheizungsbeschichtung zur Aussendung einer Infrarotstrahlung auf. Zu beiden Seiten jedes der Felder 32, 33 verlaufen über der Beschichtung mit elektrischem Kontakt flache Leitungsstreifen als jeweils zugeordnete Kupferstreifen 36a, 36b und 37a, 37b in Längsrichtung über die gesamte Plattenlänge bis zu beiden Plattenschmalseiten. Über der gesamten Plattenfläche und damit über den Flächenheizelementen 34, 35 und den Leitungsstreifen 36, 37 ist eine transparente Schutz- und Isolierfolie angebracht. Es handelt sich um eine dünne Platte, wobei die Leitungsstreifen 6, 7 an den Plattenschmalseiten 8a, 8b für einen weiteren einfachen Anschluss von Kabeln überstehen können.

Die Flächenheizelemente 34, 35 mit ihren Strahlungsheizungsbeschichtungen, die Leitungsstreifen 36a, 36b und 37a, 37b und die Schutz- und Isolierfolie sind durch Beschichten und Verkleben fest mit der Gipskartonplatte im Anlieferzustand an eine Baustelle bereits verbunden, so dass es sich um ein vorgefertigtes Verlegemodul handelt.

Bei der Seitenwand 40 sind zwei Wand-Heizmodule 31 a, 31 b in Kombination mit Gipskartonplatten 41 a, 41 b und 42a, 42b, 42c, die keine Flächenheizelemente tragen, verwendet.

Auf der linken Seite der Seitenwand 40 ist der Aufbau einer Wandtragstruktur 43 dargestellt mit einem Gerüst aus Bodenschienen 44 und Profilstehern 45 zwischen denen Dämmblöcke 46 aus Wärmedammmaterial eingesetzt und gehalten sind.

Der Flächenbereich wird von vorne mit Wand-Heizmodulen 31 und Gipskartonplatten 41, 42 abgedeckt. Diese werden vorzugsweise mit den Profilstehern 45 verschraubt.

Der rechte Bereich der Seitenwand 40 ist bereits fertig mit Gipskartonplatten montiert und verkleidet. Dabei ist in einem ersten rechten Feld eine obere längere Gipskartonplatte 41 d mit einer unteren kürzeren Gipsplatte 42b kombiniert. In einem nach links anschließenden Feld ist ein Wand-Heizmodul 31 b mit Flächenheizelementen 34 im unteren Bereich verlegt und ein darüber liegender Bereich mit einer kürzeren Gipskartonplatte 42c ergänzt. Daran schließt sich zur linken Seite ein Feld mit Gipskartonplatten 41 a, 42a entsprechend dem ersten Feld an. In einem weiteren Feld zur linken Seite ist bereits ein weiteres Wand-Heizmodul 31 a montiert, wobei der darüber liegende Bereich wieder mit einer kürzeren Gipskartonplatte abzudecken ist.

Die Leitungsstreifen 36a, 36b, 37a, 37b; 36a', 36b', 37a', 37b' sind bis zur unteren Schmalseite der Wand-Heizmodule 31 a, 31 b geführt und stehen darüber noch etwas vor. An schematisch dargestellten Anschlussstellen 47 sind im Raumeckbereich 48 (Übergang von der Seitenwand 40 zur Bodenwand 49) jeweils die Leitungsstreifen 36a, 37a, 36a' und 37a' sowie die Leitungsstreifen 36b, 37b und 36b', 37b' über Kabel 53, 54 miteinander verbunden, wobei die Kabel 53, 54 entlang dem Raumeckbereich 48 zu einer Verteilerdose 20 geführt sind. Von dort verläuft (gegebenenfalls unter den Platten) eine Kabelleitung 51 zu einem Steuergerät 52.

Damit liegen die Anschlussstellen 47 und die Kabel 53, 54 zusammen mit der Verteilerdose 50 im Raumeckbereich 48 und können dort einfach, optisch günstig und wieder zugänglich mit einer (schematisch strichliert dargestellten) Eckabdeckleiste 55 abgedeckt werden.

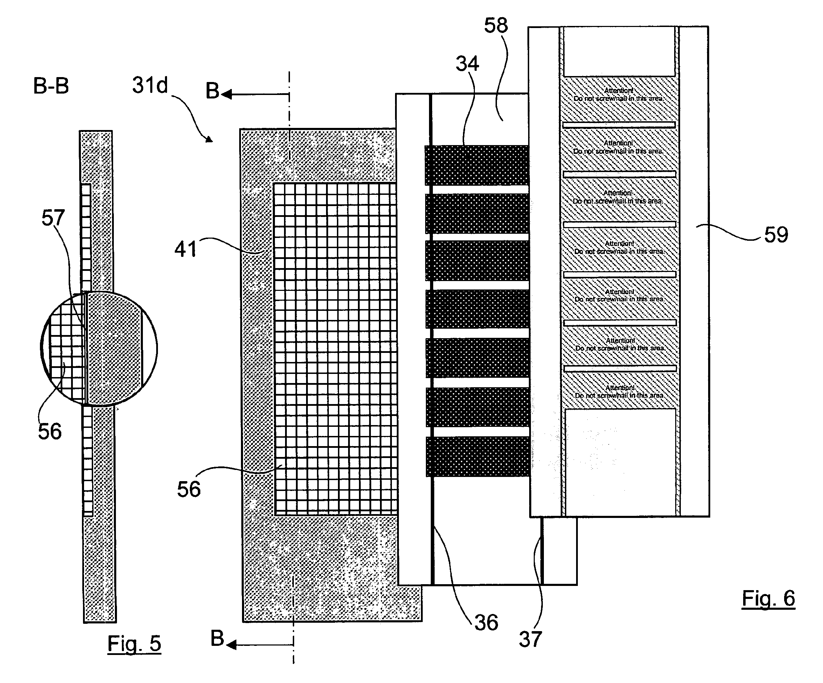

In Fig. 6 ist in einer Explosionsdarstellung der Schichtaufbau einer in der Geometrie gegenüber den Wand-Heizmodulen 31 a, 31 b modifizierten, jedoch im Schichtaufbau gleichen Ausführungsform eines Wand-Heizmoduls 31d als Plattenmodul dargestellt mit einem Längsschnitt entlang der Linie B-B in Fig. 5. Das Basisflächenteil ist eine Gipskartonplatte 41. In der Gipskartonplatte 41 ist eine flächige Ausnehmung eingebracht, in der ähnlich wie in der Basisdämmplatte 8c aus Fig. 2 auch hier eine PCM-Schicht 56 auf einer Trennfolie 57 einliegt, wie dies deutlich aus der Vergrößerung in Fig. 5 ersichtlich ist.

Das Heizsystem mit hier sieben Flächenheizelementen 34 und flachen Leitungsstreifen 36 und 37 ist mit einer Trägerfolie 58 auf der Gipskartonplatte 41 und der PCM-Schicht 56 angebracht. Die Fläche der PCM-Schicht 56 liegt hier ersichtlich unter der durch die sieben Flächenheizelemente 34 bestimmten Fläche.

Die Flächenheizelemente 34 und die Leitungsstreifen 36, 37 stellen ein leiterförmiges Flächenmuster dar. Darauf ist über die gesamte Sichtfläche des Plattenmoduls eine Kaschierfolie 59 als Kunststofffolie oder Papierbahn angebracht, auf der das darunter liegende Flächenmuster aus den Flächenheizelementen 34 und dem Leitungsstreifen 36, 37 identisch nachgebildet aufgedruckt ist. Zudem wird in jedem Flächenmusterbereich durch den Aufdruck "Attention! Do not screw/nail in this area" davor gewarnt, innerhalb des dargestellten Flächenmusters bei der Montage Nägel oder Schrauben anzubringen. Dieser Aufdruck kann auch in anderer Sprache oder mehrsprachig erfolgen.

## Patentansprüche

1. Wandaufbau einer Innenraum-Begrenzungswand,
mit einem Bestandteil aus PCM-Material (Phase Change Material) als Latentwärmespeicher
**dadurch gekennzeichnet,**
**dass** zumindest in Wandflächenteilbereichen in folgender Reihenfolge auf einer Wandtragstruktur eine PCM-Schicht (22, 22'; 56), die PCM-Material als Latentwärmespeichermaterial enthält, und darüber wenigstens ein elektrisch betreibbares, zur Rauminnenseite hin liegendes Flächenheizelement (9a-9d; 34, 35) angeordnet sind.

2. Wandaufbau nach Anspruch 1, **dadurch gekennzeichnet, dass** die Wandtragstruktur (43) selbst aus wärmedämmendem Material besteht und/oder zwischen der Wandstruktur (5) und der PCM-Schicht (22, 22') eine Dämmschicht (6) angebracht ist.

3. Wandaufbau nach Anspruch 1 oder 2, **dadurch gekennzeichnet, dass** die PCM-Schicht (22, 22'; 56) unter Verwendung von Salzhydraten und/oder Parafinen gebildet ist.

4. Wandaufbau nach einem der Ansprüche 1 bis 3, **dadurch gekennzeichnet, dass** die PCM-Schicht (22, 22'; 56) in sich zusammenhängend plattenförmig oder gekapselt, insbesondere foliengekapselt, ausgebildet ist.

5. Wandaufbau nach einem der Ansprüche 1 bis 4, **dadurch gekennzeichnet, dass** die PCM-Schicht (22; 56) in einer wannenförmigen Ausnehmung in einer Basisdämmplatte (8a-8d) oder einer Bauplatte (31 a, 31 b; 31 d) unter einem oder mehreren Flächenheizelementen (9a-9d; 34, 35) einliegt.

6. Wandaufbau nach einem der Ansprüche 1 bis 5, **dadurch gekennzeichnet, dass** der Wandaufbau einer Seitenwand und/oder einer Deckenwand und/oder einer Fußbodenwand des Gebäudeinnenraums aus einer Tragstruktur als Seitenwandstruktur (43), Deckenstruktur oder Bodenstruktur (5) besteht, auf der zumindest in einem Teilbereich wenigstens ein handhabbares Heizmodul (3a-3d; 31 a, 31 b, 31 d) als Abdeckelement angebracht und verbunden ist,
dass das Heizmodul (3a-3d; 31 a, 31 b, 31 d) aus zumindest einem elektrisch betreibbaren Flächenheizelement (9a-9d; 34, 35) und aus einem Basisflächenbauteil als Basisdämmplatte (8a-8d) oder Basisbauplatte (41) besteht, auf dem oder eingelassen in eine wannenförmige Ausnehmung die PCM-Schicht (22, 22'; 56) und darüber das zumindest eine Flächenheizelement (9a-9d; 34, 35) angebracht sind, und
dass das zumindest eine Flächenheizelement (9a-9d; 34, 35) mit elektrischen Anschlussleitungen (11, 11'; 36a, 36b; 37a, 37b) verbunden ist, die ebenfalls als Bestandteil des Heizmoduls (3a-3d; 31 a, 31 b, 31 d) auf dem Basisflächenbauteil (8a-8d; 41) angebracht sind.

7. Wandaufbau nach einem der Ansprüche 1 bis 6, **dadurch gekennzeichnet, dass** das mindestens eine Flächenheizelement (9a-9d; 34, 35) mit flachen Anschlussleitungen (11, 11'; 36a, 36b, 37a, 37b), insbesondere als Leitungsstreifen verbunden ist, die als Bestandteil des Heizmoduls (3a-3d; 31 a, 31 b, 31 d) auf dem Basisflächenbauteil (8a-8d; 41) angebracht und dort bis in einen Seitenrandbereich geführt sind, und
dass dort über Steckverbindungen und/oder Klammerverbindungen und/oder Lötverbindungen Anschlusskabel (13a, 13b; 53, 54) zur Verbindung mit einem Steuergerät ( 15; 52) für die Energieversorgung und Steuerung/Regelung des wenigstens einen Flächenheizelementes (9a-9d; 34, 35) angeschlossen sind.

8. Wandaufbau nach einem der Ansprüche 1 bis 7, **dadurch gekennzeichnet, dass** das wenigstens eine Flächenheizelement (9a-9d; 34, 35) eine dünnwandige Beschichtung als aktive infrarotstrahlende Strahlungsheizungsbeschichtung aufweist, die unmittelbar über der PCM-Schicht (22, 22'; 56) oder mittelbar über eine Trägerfolie (58) aufgebracht ist.

9. Wandaufbau nach einem der Ansprüche 1 bis 8, **dadurch gekennzeichnet, dass** das wenigstens eine Flächenheizelement (9a-9d; 34, 35) ein infrarotstrahlendes Strahlungsheizelement ist, das mit einer Niedervoltspannung unter 50 Volt betreibbar ist.

10. Wandaufbau nach einem der Ansprüche 1 bis 9, **dadurch gekennzeichnet, dass** für eine Heizungsregelung ein Steuergerät (15; 52) mit einem Raumluft-Temperatursensor (16) und/oder mit einem im Wandaufbau enthaltenen Wand-Temperatursensor (17) verbunden ist.

11. Heizmodul zur Herstellung eines Wandaufbaus nach einem der Ansprüche 1 bis 10, **dadurch gekennzeichnet,**
**dass** das Heizmodul (3a-3d; 31 a, 31 b, 31 d) aus einem Basisflächenbauteil als Basisdämmplatte (8a-8d) oder Basisbauplatte (41) und mindestens einem darauf über einer PCM-Schicht (22, 22', 56) integriert angebrachten, im verlegten Zustand an der Oberseite liegenden, Flächenheizelement (9a-9d; 34, 35) gebildet ist, wobei das aufgebrachte Flächenheizelement (9a-9d; 34, 35) dünn im Vergleich zur Schichtdicke des Basisflächenbauteils und der PCM-Schicht (22, 22'; 56) ist und
**dass** das Flächenheizelement (9a-9d; 34, 35) eine infrarotstrahlende und vorzugsweise mit Niedervoltspannung betreibbare Strahlungsheizungsbeschichtung aufweist.

12. Heizmodul nach Anspruch 11, **dadurch gekennzeichnet, dass** das mindestens eine Flächenheizelement (9a-9d; 34, 35) mit flachen Anschlussleitungen (11, 11'; 36a, 36b, 37a, 37b), insbesondere als Leitungsstreifen verbunden ist, die als Bestandteil des Heizmoduls (3a-3d; 31 a, 31 b, 31 d) auf dem Basisflächenbauteil angebracht und dort bis in einen Seitenrandbereich geführt sind, und
dass dort an Anschlusspunkten (12; 47) über Steckverbindungen und/oder Klemmverbindungen und/oder Lötverbindungen Anschlusskabel zur Verbindung mit einem Steuergerät (15; 52) für die Energieversorgung und Steuerung/Regelung des Flächenheizelements (9a-9d; 34, 35) anschließbar sind.

13. Heizmodul nach einem der Ansprüche 11 oder 12, **dadurch gekennzeichnet, dass** das wenigstens eine Flächenheizelement (9a-9d; 34, 35) eine dünnwandige Beschichtung als aktive Strahlungsheizungsbeschichtung aufweist, die unmittelbar oder mittelbar über der PCM-Schicht (22, 22'; 56) oder mittelbar über eine Trägerfolie (58) aufgebracht ist.

14. Heizmodul nach einem der Ansprüche 11 bis 13, **dadurch gekennzeichnet,**
**dass** das auf den Basisflächenbauteilen (8a-8d; 41) gebildete Flächenmuster aus den Flächenheizelementen (9a-9d; 34, 35) und den Leitungsstreifen (11, 11'; 36a, 36b, 37a, 37b) mit einer Kaschierfolie (59) und/oder Papierbahn überzogen ist, und
**dass** das Flächenmuster auf der Kaschierfolie (59) und/oder auf der Papierbahn als sichtbares Warnmuster ausgebildet ist mit einem Warnhinweis, dass die hinter dem Flächenmuster liegenden Flächenheizelemente (9a-9d; 34, 35) und Leitungsstreifen (11, 11'; 36a, 36b, 37a, 37b) nicht beschädigt werden dürfen, insbesondere hier nicht genagelt und nicht geschraubt werden darf.
